(19)

Europäisches Patentamt
European Patent Office
Office européen des brevets

(11) Publication number: **0 256 587 B1**

(12) **EUROPEAN PATENT SPECIFICATION**

(45) Date of publication of the patent specification: **11.04.90**

(51) Int. Cl.⁴: **F16B 2/08,** F41G 1/38, F41G 11/00

(21) Application number: **87201446.9**

(22) Date of filing: **28.07.87**

(54) **Carrying device for holding an object in position on a body by means of friction.**

(30) Priority: **15.08.86 NL 8602079**

(43) Date of publication of application: **24.02.88 Bulletin 88/8**

(45) Publication of the grant of the patent: **11.04.90 Bulletin 90/15**

(84) Designated Contracting States: **BE DE ES FR GB IT NL SE**

(56) References cited:
**DE-A- 2 050 436**
**US-A- 2 142 453**
**US-A- 2 151 768**
**US-A- 2 383 881**
**US-A- 2 517 274**
**US-A- 2 717 447**
**US-A- 3 241 800**

(73) Proprietor: **B.V. Optische Industrie "De Oude Delft", Van Miereveltlaan 9, NL-2612 XE Delft(NL)**

(72) Inventor: **Baumann, Jacob Sijbrand, Park Berkenoord 52, NL-2641 CZ Pijnacker(NL)**

(74) Representative: **van der Burg, Louis, Van Miereveltlaan 9, NL-2612 XE Delft(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

The invention relates to a method for improving the fastening of the combination of a body with an essentially round cross section, an object and a carrying device for holding the object in position on the outer periphery of the body by means of friction, the carrying device comprising a retaining element in the form of a flexible strap for gripping round the body and the object, a clamping device designed as a separate unit from said body and said object, the object having an inner curved supporting face cooperating with the corresponding surface of the body and an outer guide face for said strap.

The invention also relates to combination a body with an essentially round cross section, an object and a carrying device for holding the object in position on the outer periphery of the body by means of friction, the carrying device comprising a retaining element in the form of a flexible strap for gripping round the body and the object and a clamping device designed as a separate unit from said body and said object, the object having an inner curved supporting face cooperating with the corresponding surface of the body and an outer guide face for said strap.

Such a method and combination are known from US-A 2 383 881. Therein is described a mounting means for street signs on a post. The mounting means comprise a flexible strap, the ends of which are secured in turnbuckle clamps. The clamps are joined together by a turnbuckle bolt.

A stiff curved spring steel post plate is an object to be hold by the strap to the post. A street sign is attached to the spring plate.

The strap is in frictional engagement with the post as much as possible. The curvature of the post is not identical to the natural set of the spring plate.

Such a configuration is unfit to be used to hold in position an instrument such as a mirror in the vicinity of the front end of a barrel of a cannon, more particularly a tank gun. By means of such a mirror, deviations occurring in the barrel during use are detected, so that such deviations can be processed in the shooting procedure. When use would be made of a combination according to US-A 2 383 881 the forces acting on the body and the strap while a shot is being fired will be such that the mirror is displaced very easily and such that the strap is torn after one or a few shots.

In European Patent Application EP-A 0 082 257 there is described a retaining element which is designed in the form of an essentially annular carrier for the instrument in question. This annular carrier is provided with a platform formed integrally therewith, on which the instrument in question can be mounted. The annular part is open at a point, diametrically opposite said platform, so that the opposite ends of said annular carrier can be pulled towards each other by means of a set of adjusting screws, in order to fix the entire unit on a cannon barrel. The annular carrier is provided with internal screw thread, while it is necessary for the cannon barrel in question to be provided with corresponding screw thread on an outer periphery part thereof. In this way the annular carrier can be screwed onto the cannon barrel, and by means of the clamping device the whole unit can be fixed of the cannon barrel. It is often inadmissible or impossible in the field to provide a cannon barrel with external screw thread which is to serve to fit such an annular carrier on the cannon barrel. The object of the invention is to eliminate the above-described disadvantages, while ensuring that the object in question is held firmly in place on the body in question in the particular operational circumstances. The invention is based on the idea of holding a said objecton on a said body in the desired manner by means of friction forces, while adding a minimum of weight.

To this end a method according to the invention is characterized in increasing the friction in the contact areas between the inner curved supporting face of the object and the corresponding surface of the body and in decreasing the friction in the contact areas between the body and the strap.

The combination according to the invention is characterized in that the clamping device comprises two separate strap tensioners each provided with a guide face for said strap, in that said strap is laid as a closed loop around each of the two strap tensioners and has free ends being fastened to each other, in that the guide faces of the two strap tensioners as well as the guide face of the object are located a considerable distance away from the outer periphery of the body, thereby decreasing the circumferential angle along which said strap contacts the body and in that the curvature of the inner curved face of the object is equal to the curvature of the corresponding surface of the body.

The invention can be used advantageously to hold an instrument such as a mirror in place on a body, such as the barrel of a tank gun, near the front end thereof, or to retain said barrel without it being necessary to prework said body or said barrel locally in any way with a cutting tool.

A body or cannon barrel on which one or more carrying devices are fitted a lubricant is applied to those points where a particular strap is pressed against the body or cannon barrel and also to those points where opposite parts of said strap come into contact with each other.

A coefficient of friction for aluminium (parts of an object or a clamping device) on steel of 0.2–0.5 can be achieved for the body or cannon barrel if the body or cannon barrel surface part in question and a part of a particular object or clamping device placed thereon fit each other with a mutual tolerance which is less than 0.040 mm.

The invention will be explained in greater detail below with reference to the drawing of a number of embodiments.

In the drawing:

Fig. 1 is a cross section of an essentially cylindrical body and a carrying assembly according to the invention fixed thereon;

Fig. 2 is a side view along the Line II–II in Fig. 1 of a part of the essentially cylindrical body and the carrying assembly according to the invention fixed thereon;

Fig. 3 is a side view similar to that shown in Fig. 2 where a part is shown in section along the Line III–III in Fig. 1;

Fig. 4, 5, 6 and 7 are diagrams to illustrate the way in which a clamping strap is fitted in a carrying assembly according to the invention; and

Fig. 8 is a diagram of a cross section similar to that shown in Fig. 1, to illustrate an alternative embodiment of a carrying assembly according to the invention.

For the sake of simplicity the invention is explained below with reference to a carrying assembly illustrating the invention for holding in place a reference mirror on a cannon barrel. Such a mirror at the front end of a cannon barrel serves to detect deviations taking place in the barrel during use and to process said deviations in the shooting procedures. Such a mirror should be simple to fix against and on a cannon barrel of known dimensions, provided that at the point of such fixing coats of lacquer on the cannon barrel are stripped down to the bare cannon barrel material. It is also a requirement that no aids such as grooves, keyways, threaded holes, weld-on components etc. which would assist the fastening of the carrying assembly against and on the cannon barrel may be provided.

A carrying assembly according to the invention is equipped to hold in position on a cannon barrel such a mirror and the accompanying mirror carrying system exclusively by means of friction, such a fastening being resistant to the movements and vibrations undergone by the barrel during and after the firing of missile.

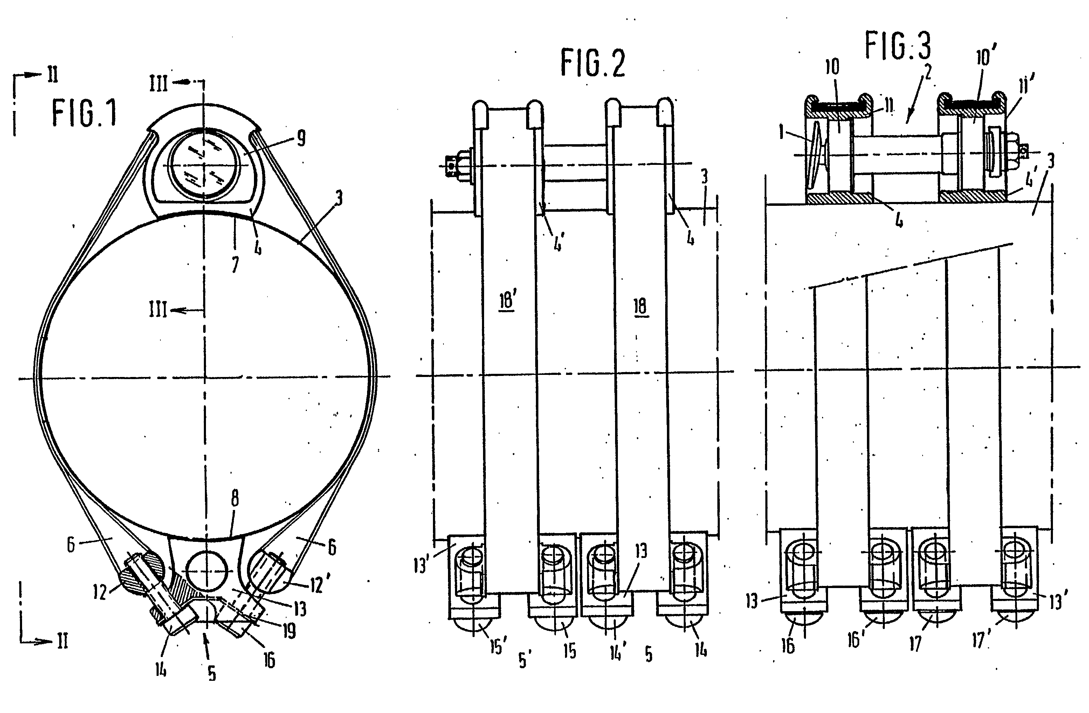

The embodiment of the invention shown in Figs. 1 to 3 is in particular intended to hold in position an object, more particularly a reference mirror system with a reference mirror 1 and a mirror-carrying structure 2, on a body with an essentially round cross section, more particularly a cannon barrel, a part 3 of which is shown in these figures. In this embodiment there are two objects of carrying assemblies which are spaced apart in the axial direction of the cannon barrel. Each such carrying assembly; in the embodiment shown comprises a frame 4 for carrying the mirror-carrying structure; a strap tensioning device 5 and a clamping strap formed into a closed loop 6. Each frame such as 4 is provided with a curved supporting face 7 whose curvature is matched to that of the corresponding surface part of the cannon barrel on which the frame in question has to rest. Each of the two strap tensioning devices is also provided with a similar curved supporting face 8. In the embodiment shown each such frame 4 is designed as a holder and for that purpose is provided with a central opening 9 in which is fixed a round flange 10, 10′ with a light drive; in order to prevent axial displacement of the mirror-carrying assembly, each of said flanges is provided with a projecting edge which rests against a corresponding shoulder part of the holder.

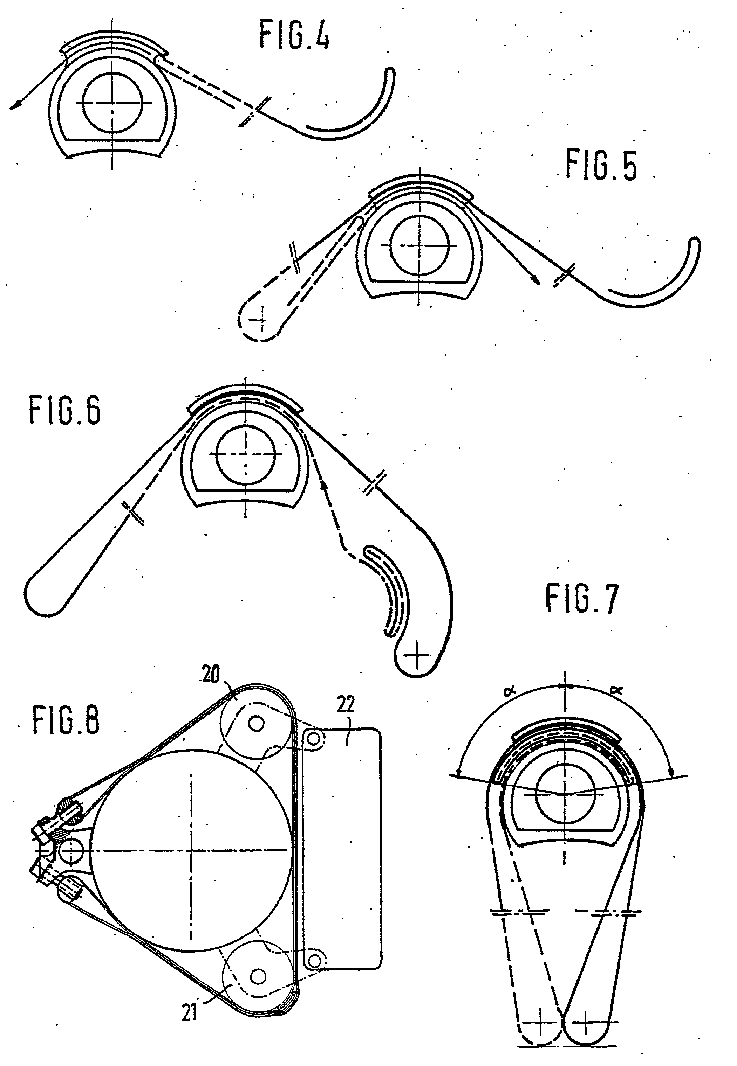

Each of the frames 4, 4′ is also provided with an essentially cylindrical clamping strap guide face 11, 11′. Each of the strap tensioning devices 5, 5′ is in turn made up of two strap tensioners such as 12 and 12′, a tension screw holder 13, 13′, and tension screws 14, 14′; 15, 15′; 16, 16′; and 17, 17′. Each of the two carrying assemblies also comprises a clamping strap 18, 18′. As shown in greater detail in Figs. 4 to 7, each such clamping strap is laid as a closed loop around the two strap tensioners of a corresponding strap tensioning device, the cannon barrel and the frame opposite it. In order to prevent such a clamping strap from sliding in the axial cannon barrel direction, each clamping strap guide face 11, 11′ is provided with an upright edge such as that shown in greater detail in Fig. 3.

Figs. 4 to 7 illustrate the way in which each of the two clamping straps is mounted and by means of folded joint connecting together the two free ends to a loop shown in Fig. 7 can pull the frame in question by means of the appropriate strap tensioning device firmly against the cannon barrel surface.

Each of the frames 4, 4′ is made of aluminium, on account of its good coefficient of friction, the possibility of truing up, and the relatively low weight of such a frame. The tensioningscrew holders 13, 13′ are also made of aluminium, while the corresponding four steel tensioning screws serve to tighten the particular clamping strap by means of the appropriate metal strap tensioner. Viewed in the axial cannon barrel direction, each tensioning screw holder is provided with a tapered intermediate part. In order to prevent the tensioning screws from damaging the tensioning screw holder, provision is made, between every two adjacent tensioning screws which are screwed into the various strap tensioners of the same strap tensioning device, for a cold-rolled spring steel strip, one of which is indicated by 19 in Fig. 1. Each strip is provided with two holes in which the tensioning screws in question are placed. Each of these steel strips is also filled in a groove hollowed out in the tensioning screw holder, in such a way that the strip is fixed and cannot turn as well.

The tensioning screws are, for example, made in the form of steel socket-head screws.

The strap tensioners are made of, for example, ETG steel. On account of buckling due to the force exerted by the clamping strap, the tensioning screw holes of a particular strap tensioner are provided in such a way that the central axis of each of these two screw holes deviates over such a small angle from the normal determined by the plane on which the main tensioning forces act on the strap guide face of such a strap tensioner that this main tensioning force acting thereon has the tendency to make the two central axes of these holes run essentially parallel to each other. All this is designed in such a way that with maximum load the tensioning screw holes run essentially parallel to each other.

When fitted, the tensioning screws produce a dynamically loaded joint in which the tension force is of primary importance. The fixing . torque greatly depends on the coefficient of friction between the types of material placed on each other and the surface condition thereof. In the absence of a firm joint, the pretensioning force does not increase during tightening of the tensioning screws until the play for all parts and connections is eliminated and these parts settle. During this settling the tension force decreases and has to be adjusted again. In view of the requirement that the weight of the carrying assembly taken as a whole should be as low as possible, use is made of relatively short steel socket-head screws. During fixing of the clamping straps it is assumed that during the pretensioning all those faces which could cause an uncontrollable friction are greased, as a result of which the coefficient of friction is reduced and the maximum pretension can be achieved with a lower fixing torque. Where the clamping strap runs doubly over the barrel (left and right in Fig. 1) large normal forces act, resulting in large friction force, so that on tensioning the clamping strap slides poorly over the barrel. That is why grease is applied locally between the barrel and the clamping strap and preferably also between the two parts of the clamping strap. This means that the tension which is produced in the clamping strap with the strap tensioner is transferred as completely as possible upwards to the object to be held fast and is not divided into a part which is not necessary to make the clamping strap slide over the barrel and a part which is subsequently left over to retain the object. Of course, the friction between the object and the barrel or between the tensioning device and the barrel must be as great as possible. Using a torque spanner, it is possible to build up the pretension in controlled fashion by turning all tensioning screws alternately with increasing torque of equal magnitude and tightening the relevant tensioners parallel relative to the tensioning screw carrier..

The tensioning screw carriers are capable of withstanding the maximum forces which are exerted on them by the clamping straps, and such a tensioning screw carrier transmits the resultants of said forces to the gun barrel in question.

To join the free ends of a clamping strap to each other a folded joint of the type shown schematically in Fig. 6 was selected. Here the free ends of the clamping strap are pushed into each other and when fitted the returning strap part acts to exert added pressure on the folded joint. With such a structure as that detailed in Fig. 7, this folded joint seen in its entirety is pressed down on during the maximum load of the clamping strap by the returning part of the strap, in such a way that, with the relatively large acting forces, this joint cannot open and, as a result of the normal forces developed, remains in place, so that, when sliding during the clamping of the clamping straps, a mutual counteracting friction force occurs, with the result that pulling open of the folded joint is counteracted. The clamping straps are made of spring strip steel. For obtaining a reproducible and optimum fastening of the whole assembly to a particular cannon barrel it is necessary for the friction between the tensioning screw surfaces and screw joints, and also the friction between the clamping straps and the cannon barrel, to be low and reproducible. The friction values can be influenced by means of lubricants.

When the friction between the particular clamping straps and the cannon barrel is reduced as low as possible, the tension forces from the tensioning devices will be transferred from the tensioning direction in the optimum manner to a particular frame.

In the embodiment described with reference to Figs. 1 to 3 the friction for holding the mirror and mirror carrier in position on the cannon barrel is caused by normal forces which for each carrying assembly act on two diametrically opposite places. If in the fitted state the pulling force developed in a clamping strap is indicated by Fs, the maximum normal force acting per carrying assembly on the cannon barrel in a "two-point-structure" of the type referred to above is equivalent to 1.73 Fs x 2 = 3.46 Fs.

For optimum use of the forces Fs developed in a clamping strap, it is advisable for each carrying assembly to be designed as a "three-point structure", in which the points where the resulting normal forces act on the cannon barrel are mutually displaed over angles of 120 degrees. The total normal force developed per carrying assembly and acting on the gun barrel is then given by the equation 3 x 1.73 Fs = 5.2 Fs.

An embodiment of such a three-point structure of a single carrying assembly is schematically shown in Fig. 8. Such an embodiment can, for example, be used advantageously if a relatively large or relatively heavy instrument has to be held in place on a cannon barrel. Such a structure has an auxiliary element 20 which serves as an additional frame, and which is also provided with a curved supporting surface whose curvature is matched to that of the particular surface part of the cannon barrel on which this auxiliary element has to rest, and with a clamping strap guide face. This auxiliary element is together with a frame 21, which is comparable to a frame such as 4 which is used in the embodiment shown in figs. 1 to 3, fastened to a platform 22 with facilities (not shown) in which the instrument in question can be fitted.

If desired, a carrying assembly of the type shown in Fig. 8 can be combined with a second similar carrying assembly which is disposed displaced in the axial direction of the cannon barrel in such a way that the platform is carried at four points.

In an alternative embodiment of the invention, a single carrying assembly and a single clamping strap would suffice. With it, a mirror can be retained with a single clamping strap on a barrel in a similar way to that described and illustrated with reference to the embodiments of Figs. 1 - 3.

## Claims

1. Method for improving the fastening of the combination of a body (3) with an essentially round cross section, an object (4) and a carrying device for holding the object in position on the outer periphery of the body by means of friction, the carrying device comprising

a retaining element in the form of a flexible strap (18) for gripping round the body and the object a clamping device (5) designed as a separate unit from said body and said object

the object having an inner curved supporting face (7) cooperating with the corresponding surface of the body and an outer guide face for said strap, characterized in increasing the friction in the contact areas between the inner curved supporting face of the object and the corresponding surface of the body and in decreasing the friction in the contact areas between the body and the strap.

2. Method according to claim 1 characterized in decreasing the circumferential angle along which the strap contacts the body.

3. Method according to claim 2 characterized in locating the points where the strap reaches the clamping device and the object a considerable distance from the surface of the body.

4. Method according to claim 2 or 3 characterized in guiding the strap also round one or more auxiliary frames (21), thereby decreasing the circumferential angle along which the strap contacts the body.

5. Method according to claim 4 characterized in mutually displacing the clamping device, the object and N auxiliary objects over angles of (30/(N+2))° measured along the circumference of the body.

6. Method according to claim 1, 2, 3, 4 or 5 characterized in applying a lubricant in the contact areas between the body and the strap.

7. Method according to any one of the claims 1 to 6 characterized in using an endless strap which is of such a length that it doubly spans the body and the object and the one or more auxiliary frames in going from the clamping device to the clamping device.

8. Method according to claim 7 characterized in applying a lubricant in the contact areas between opposite parts of the strap that are in contact with each other.

9. In combination a body (3) with an essentially round cross section, an object (4) and a carrying device for holding the object in position on the outer periphery of the body by means of friction, the carrying device comprising a retaining element in the form of a flexible strap (18) for gripping round the body and the object and a clamping device (5) designed as a separate unit from said body and said object the object having an inner curved supporting face cooperating with the corresponding surface of the body and an outer guide face (11) for said strap, characterized in that the clamping device (5) comprises two separate strap tensioners (12, 12') each provided with a guide face for said strap, in that said strap is laid as a closed loop around each of the two strap tensioners and has free ends being fastened to each other in that the guide faces of the two strap tensioners as well as the guide face of the object are located a considerable distance away from the outer periphery of the body, thereby decreasing the circumferential angle along which said strap contacts the body and in that the curvature of the inner curved face of the object is equal to the curvature of the corresponding surface of the body.

10. The combination according to claim 9 characterized in that the strap is also guided round one or more auxiliary frames (20), thereby decreasing the circumferential angle along which the strap contacts the body.

11. The combination according to claim 10 characterized in that measured along the circumference of the body the clamping device, the object and N auxiliary frames are mutually displaced over angles of (360/(N+2))° .

12. The combination according to one of the claims 9, 10 or 11 characterized in that a lubricant is applied in the contact areas between the body and the strap.

13. The combination according to one of the claims 9, 10, 11 or 12 characterized in that a lubricant is applied in the contact areas between opposite parts of the strap that are in contact with each other.

14. The combination according to one of the claims 9, 10, 11, 12 or 13 characterized in that the free ends of the strap are fastened to each other by means of a folded joint.

15. The combination according to claim 14 characterized in that the folded joint is clamped between a part of said strap which is on the side of said folded joint facing away from the body and a surface part which is supported from the body.

16. The combination according to claim 10 characterized in that the object and one auxiliary frame are fixed to a platform (22) with facilities for mounting a second object.

17. The combination according to one of the claims 9–16 characterized in that the guide face for the strap, forming part of the object or auxiliary frame is confined between two upright side edges which are designed to limit a shift in the transverse direction of the strap.

18. The combination according to one of the claims 9–17 characterized in that each of the two strap tensioners on either side of the particular guide face thereof comprises screw holes into each of which a tensioning screw (14, 14') is screwed, while the central axis of each of the two screw holes of such a strap tensioner deviates over such an angle from the normal determined by the plane in which the main tensioning force acts on the guide face that the main tensioning force action acting thereon has the tendency to make these two central axes run essentially parallel to each other.

19. The combination according to claim 18 characterized in that the clamping device between a particular pair of bores for the tensioning screws which cooperate with the same strap tensioner is provided with a narrowed part.

20. The combination according to one of the claims 9–19 characterized in that the clamping device has a tensioning screw holder (13) made of aluminium and in that two neighbouring tensioning screws, which can cooperate with different strap tensioners by means of a spring steel strip (19) which is secured against turning in the tensioning screw holder, rest on carrying faces of the tensioning screw holder when the screws have been screwed into the particular strap tensioners.

## Revendications

1. Procédé pour améliorer la solidarisation de la combinaison d'un corps (3) ayant une section sensiblement ronde, d'un objet (4) et d'un dispositif de support destiné à maintenir l'objet en position sur la périphérie extérieure du corps par effet de friction, le dispositif de support comprenant un élément de retenue en forme de sangle flexible (18) propre à enserrer le corps et l'objet en passant autour un dispositif de serrage (5) agencé sous forme d'organe indépendant dudit corps et dudit objet, l'objet présentant une face de support incurvée intérieure (7) coopérant avec la surface correspondante du corps et une face de guidage extérieure pour ladite sangle, caractérisé en ce que l'on augmente la friction dans les zones de contact entre la face de support incurvée intérieure de l'objet et la surface correspondante du corps et en ce que l'on diminue la friction dans les zones de contact entre le corps et la sangle.

2. Procédé selon la revendication 1, caractérisé en ce que l'on réduit l'arc de circonférence le long duquel la sangle est en contact avec le corps.

3. Procédé selon la revendication 2, caractérisé en ce que l'on place les points où la sangle atteint le dispositif de serrage et l'objet à une distance importante de la surface du corps.

4. Procédé selon la revendication 2 ou 3, caractérisé en ce que l'on guide la sangle en la faisant passer également autour d'une ou plusieurs montures auxiliaires (21), en réduisant ainsi l'arc de circonférence le long duquel la sangle est en contact avec le corps.

5. Procédé selon la revendication 4, caractérisé en ce que l'on écarte mutuellement le dispositif de serrage, l'objet et N objets auxiliaires d'angles de 360/(N+2) degrés, mesurés le long de la circonférence du corps.

6. Procédé selon la revendication 1, 2, 3, 4 ou 5 caractérisé en ce que l'on applique un lubrifiant dans les zones de contact entre le corps et la sangle.

7. Procédé selon l'une quelconque des revendications 1 à 6, caractérisé en ce que l'on fait appel à une sangle sans fin dont la longueur est telle qu'elle ceinture doublement le corps, l'objet et la ou les montures intermédiaires en allant du dispositif de serrage au dispositif de serrage.

8. Procédé selon la revendication 7, caractérisé en ce que l'on applique un lubrifiant dans les zones de contact entre les parties en regard de la sangle qui sont en contact mutuel.

9. Combinaison d'un corps (13) ayant une section sensiblement ronde, d'un objet (4) et d'un dispositif de support destiné à maintenir l'objet en position sur la périphérie extérieure du corps par effet de friction, le dispositif de support comprenant un élément de retenue en forme de sangle flexible (18) propre à enserrer le corps et l'objet en passant autour et un dispositif de serrage (5) agencé sous forme d'organe indépendant dudit corps et dudit objet, l'objet présentant une face du support intérieure incurvée coopérant avec la surface correspondante du corps et une face de guidage extérieure (11) pour ladite sangle, caractérisée en ce que le dispositif de serrage (5) comprend deux tendeurs de sangle distincts (12, 12`) pourvus chacun d'une face de guidage pour ladite sangle, en ce que ladite sangle est montée de façon à former une boucle fermée autour de chacun des deux tendeurs de sangle et présente des extrémités libres assujetties l'une à l'autre, en ce que les faces de guidage des deux tendeurs de sangle ainsi que la face de guidage de l'objet sont situées à une distance importante de la périphérie extérieure du corps, en réduisant ainsi l'arc de circonférence le long duquel ladite sangle est en contact avec le corps, et en ce que la courbure de la face incurvée intérieure de l'objet est égale à la courbure de la surface correspondante du corps.

10. Combinaison selon la revendication 9, caractérisée en ce que la sangle est également guidée de manière à passer autour d'une ou plusieurs montures auxiliaires (20), en réduisant ainsi l'arc de circonférence le long duquel la sangle est en contact avec le corps.

11. Combinaison selon la revendication 10, caractérisée en ce que, mesurée le long de la circonférence du corps, la distance angulaire mutuelle du dispositif de serrage, de l'objet et de N montures auxiliaires est de 360/(N+2) degrés.

12. Combinaison selon l'une des revendications 9, 10 ou 11, caractérisée en ce qu'un lubrifiant est appliqué dans les zones de contact entre le corps et la sangle.

13. Combinaison selon l'une des revendications 9, 10, 11 ou 12, caractérisée en ce qu'un lubrifiant est appliqué dans les zones de contact entre les parties en regard de la sangle qui sont en contact mutuel.

14. Combinaison selon l'une des revendications 9, 10, 11, 12 ou 13, caractérisée en ce que les extrémités libres de la sangle sont assujetties l'une à l'autre au moyen d'un joint à pliure.

15. Combinaison selon la revendication 14, caractérisée en ce que le joint à pliure est enserré entre une partie de ladite sangle qui se trouve du côté dudit à pliure opposé au corps et une partie de surface qui est supportée par le corps.

16. Combinaison selon la revendication 10, caractérisée en ce que l'objet et une monture auxiliaire sont fixés à une platine (22) pourvue de moyens pour le montage d'un deuxième objet.

17. Combinaison selon l'une des revendications 9 à 16, caractérisée en ce que la face de guidage pour la sangle, faisant partie de l'objet ou de la monture auxiliaire, est confinée entre deux bords latéraux droits qui sont conformés de manière à limiter le déplacement de la sangle dans le sens transversal.

18. Combinaison selon l'une des revendications 9 à 17, caractérisée en ce que chacun des deux tendeurs de sangle, de chaque côté de sa face de guidage particulière, comprend des trous de vis dans chacun desquels est vissée une vis de tension (14, 14`), tandis que l'axe central de chacun des deux trous de vis d'un tel tendeur de sangle s'écarte d'un angle tel, par rapport à la normale déterminée par le plan dans lequel la force de tension principale agit sur la face de guidage, que la force de tension principale agissant sur celle-ci ait tendance à faire prendre à ces deux axes centraux des directions sensiblement parallèles entre elles.

19. Combinaison selon la revendication 18, caractérisée en ce que le dispositif de serrage entre une paire particulère de trous pour les vis de tension qui coopèrent avec le même tendeur de sangle présente une partie rétrécie.

20. Combinaison selon l'une des revendications 9 à 19, caractérisée en ce que le dispositif de serrage comporte un bloc porte-vis de tension (13) en aluminium et en ce que deux vis de tension voisines, qui peuvent coopérer avec des tendeurs de sangle différents par l'intermédiaire d'une bande en acier à ressorts (19) qui est immobilisée en rotation dans le bloc porte-vis de tension, reposent sur des faces portantes du bloc porte-vis de tension lorsque les vis ont été vissées dans les tendeurs de sangle correspondants.

**Patentansprüche**

1. Verfahren zur Verbesserung der Befestigung der Kombination eines Körpers (3) mit einem im wesentlichen runden Querschnitt, eines Gegenstands (4) und einer Trägereinrichtung zum Halten des Gegenstands in einer Stellung an dem äußeren Umfang des Körpers mittels Reibung, wobei die Trägereinrichtung ein Halteelement in Form eines flexiblen Streifens (18) zum Greifen um den Körper und den Gegenstand umfaßt, eine Klemmeinrichtung (5), welche als von dem Körper und dem Gegenstand getrennte Einheit ausgebildet ist, wobei der Gegenstand eine innere gebogene Lagerfläche (7) aufweist, welche mit der korrespondierenden Oberfläche des Körpers zusammenwirkt, sowie eine äußere Führungsfläche für den Streifen, dadurch gekennzeichnet, daß die Reibung in den Kontaktbereichen zwischen der inneren gebogenen Lagerfläche des Gegenstands und der korrespondierenden Oberfläche des Körpers verstärkt wird und daß die Reibung in den Kontaktbereichen zwischen dem Körper und dem Streifen verringert wird.

2. Verfahren nach Anspruch 1, gekennzeichnet durch eine Verringerung des Umfangswinkel, entlang dessen der Streifen den Körper berührt.

3. Verfahren nach Anspruch 2, gekennzeichnet durch ein Anordnen der Punkte, an welchen der Streifen die Klemmeinrichtung und den Gegenstand erreicht, in einem erheblichen Abstand von der Oberfläche des Körpers.

4. Verfahren nach Anspruch 2 oder 3, gekennzeichnet durch ein Führen des Streifens auch um einen oder mehrere Hilfsrahmen (21), um auf diese Weise den Umschließungswinkel zu vermindern, entlang dessen der Streifen den Körper berührt.

5. Verfahren nach Anspruch 4, gekennzeichnet durch ein gegenseitiges Versetzen der Klemmeinrichtung, des Gegenstandes und N Hilfsgegenstände über Winkel (360/(N+2))° gemessen entlang dem Umfang des Körpers.

6. Verfahren nach Anspruch 1, 2, 3, 4 oder 5, gekennzeichnet durch ein Aufbringen eines Schmiermittels in den Kontaktbereichen zwischen dem Körper und dem Streifen.

7. Verfahren nach einem der Ansprüche 1–6, gekennzeichnet durch die Verwendung eines endlosen Streifens, welcher eine derartige Länge aufweist, daß er zweifach den Körper und den Gegenstand und den einen oder die mehreren Hilfsrahmen durch Erstreckung von der Klemmeinrichtung zu der Klemmeinrichtung umspannt.

8. Verfahren nach Anspruch 7, gekennzeichnet durch ein Aufbringen eines Schmiermittels in den Kontaktbereichen zwischen gegenüberliegenden Teilen des Streifens, welche sich zueinander in Kontakt befinden.

9. Kombination eines Körpers (3) mit einem im wesentlichen runden Querschnitt, eines Gegenstands (4) und einer Trägereinrichtung zum Halten des Gegenstands in einer Stellung an dem äußeren Umfang des Körpers mittels Reibung, wobei die Trägereinrichtung ein Halteelement in Form eines flexiblen Streifens (18) zum Umgreifen des Körpers und des Gegenstandes umfaßt, sowie eine Klemmeinrichtung (5), welche als von dem Körper und dem Gegenstand getrennte Einrichtung ausgebildet ist, wobei der Gegenstand eine innere gebogene Lagerfläche aufweist, welche mit der korrespondierenden Oberfläche des Körpers und einer äußeren Führungsfläche (11) für den Streifen zusammenwirkt, dadurch gekennzeichnet, daß die Klemmeinrichtung (5) zwei separate Streifenspanner (12, 12') umfaßt, welche jeweils mit einer Führungsfläche für den Streifen versehen sind, daß der Streifen als geschlossene Schleife um jeden der beiden Streifenspanner gelegt ist und freie Enden aufweist, welche miteinander verbunden sind, daß die Führungsfläche der beiden Streifenspanner sowie die Führungsfläche des Gegenstandes in einem beträchtlichen Abstand von dem äußeren Umfang des Körpers angeordnet sind, um auf diese Weise den Umschlingungswinkel zu vermindern, entlang dessen der Streifen den Körper berührt, und daß die Krümmung der inneren gebogenen Fläche des Gegenstandes gleich ist zu der Krümmung der korrespondierenden Oberfläche des Körpers.

10. Kombination nach Anspruch 9, dadurch gekennzeichnet, daß der Streifen auch um einen oder mehrere Hilfsrahmen (20) geführt ist, um auf diese Weise den Umschließungswinkel, entlang dessen der Streifen den Körper berührt, zu vermindern.

11. Kombination nach Anspruch 10, dadurch gekennzeichnet, daß, gemessen längs des Umfanges des Körpers die Klemmeinrichtung, der Gegenstand und N Hilfsrahmen gegenseitig über Winkel von (360/(N+2))° versetzt sind.

12. Kombination nach einem der Ansprüche 9, 10 oder 11, dadurch gekennzeichnet, daß ein Schmiermittel in den Kontaktbereichen zwischen dem Körper und dem Streifen aufgebracht ist.

13. Kombination nach einem der Ansprüche 9, 10, 11 oder 12, dadurch gekennzeichnet, daß ein Schmiermittel in den Kontaktbereichen zwischen gegenüberliegenden Teilen des Streifens, welche sich in Kontakt miteinander befinden, aufgebracht ist.

14. Kombination nach einem der Ansprüche 9, 10, 11, 12 oder 13, dadurch gekennzeichnet, daß die freien Enden der Streifen mittels einer Faltverbindung miteinander verbunden sind.

15. Kombination nach Anspruch 14, dadurch gekennzeichnet, daß die Faltverbindung zwischen einem Teil des Streifens, welcher sich an einer Seite der Faltverbindung befindet, welche von dem Körper wegzeigt, und einem Flächenbereich, welcher von dem Körper gelagert ist, geklemmt ist.

16. Kombination nach Anspruch 10, dadurch gekennzeichnet, dass der Gegenstand und ein Hilfsrahmen an einer Plattform (22) versehen mit Mitteln zur Lagerung eines zweiten Gegenstandes befestigt sind.

17. Kombination nach einem der Ansprüch 9–16, dadurch gekennzeichnet, daß die Führungsfläche für den Streifen, welche ein Teil des Gegenstandes oder des Hilfsrahmens bildet, zwischen zwei hochstehenden Seitenkanten begrenzt wird, welche vorgesehen sind, um eine Verschiebung in einer Querrichtung des Streifens zu begrenzen.

18. Kombination nach einem der Ansprüche 9–17, dadurch gekennzeichnet, daß jeder der beiden Streifenspanner an beiden Seiten seiner jeweiligen Führungsfläche Gewindeausnehmungen aufweist, in welche eine Spannschraube (14, 14') eingeschraubt ist, während die zentrische Achse jeder der beiden Schraubenausnehmungen eines derartigen Streifenspanners in einem derartigen Winkel von der Senkrechten, in welcher die Hauptspannkraft auf die Führungsfläche wirkt, abweicht, daß die Wirkung der Hauptspannkraft, welche darauf wirkt, die Neigung hat, diese beiden zentrischen Achsen im wesentlichen parallel zueinander verlaufend auszurichten.

19. Kombination nach Anspruch 18, dadurch gekennzeichnet, daß die Klemmeinrichtung zwischen einem speziellen Paar von Bohrungen für die Spannschrauben, welche mit dem gleichen Streifenspanner zusammenwirken, mit einem verengten Teil versehen ist.

20. Kombination nach einem der Ansprüche 9–19, dadurch gekennzeichnet, daß die Klemmeinrichtung einen Spannschraubenhalter (13), welcher aus Aluminium gefertigt ist, umfaßt, und daß zwei benachbarte Spannschrauben, welche mit unterschiedlichen Streifenspannern mittels eines Federstrahlstreifens (19), welcher in dem Spannschraubenhalter gegen Drehung gesichert ist, zusammenwirken können, auf Trägerflächen des Spannschraubenhalters ruhen, wenn die Schrauben in die jeweiligen Streifenspanner eingeschraubt sind.

FIG.1
FIG.2
FIG.3
II
III
1
2
3
4
4'
5
5'
6
7
8
9
10
10'
11
11'
12
12'
13
13'
14
14'
15
15'
16
16'
17
17'
18
18'
19

FIG.4
FIG.5
FIG.6
FIG.7
FIG.8
20
21
22
α
α